# EUROPEAN PATENT APPLICATION

(11) **EP 4 730 535 A1**
(43) Date of publication of application: **22.04.2026**
(21) Application number: 24937275.6
(22) Date of filing: 08.11.2024
(51) Int. Cl.: H01M 50/358, H01M 50/30, H01M 50/244, H01M 50/249

(54) **BATTERY MODULE**

(30) Priority: 22.04.2024 KR 20240053426
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR)
(74) Representative: Plasseraud IP
(86) International application number: PCT/KR2024/017627
(87) International publication number: WO 2025/225802

(57) **Abstract**

Disclosed is a battery module. A battery module according to an embodiment of the present disclosure may include: a case configured to provide a space therein and including a top plate; a battery cell positioned inside the case; and a flexible cover configured to cover the top plate and having a plurality of holes.

## Description

### TECHNICAL FIELD

The present disclosure relates to a battery module.

This application is based on and claims priority from Korean Patent Application No. 10-2024-0053426, filed on April 22, 2024, with the Korean Intellectual Property Office, the disclosure of which is incorporated herein in its entirety by reference.

### BACKGROUND ART

As the demand for portable electronic products such as smartphones, tablet PCs, and smart watches increases significantly, and as electric vehicles become widespread, active research on batteries mounted to them, especially secondary batteries capable of being repeatedly charged and discharged, is underway.

Currently commercialized secondary batteries include nickel-cadmium batteries, nickel-hydrogen batteries, nickel-zinc batteries, lithium secondary batteries, and the like. Among of them, lithium secondary batteries are in the spotlight for their advantages of free charging and discharging due to almost no memory effect, a very low self-discharge rate, and a high energy density, compared to nickel-based secondary batteries.

These lithium secondary batteries use lithium-based oxides and carbon materials as positive and negative electrode active materials, respectively. The lithium secondary batteries include an electrode assembly in which positive and negative electrode plates, which are coated with the positive and negative electrode active materials, respectively, are disposed with a separator therebetween, and an exterior case, i.e., a battery case, that stores and seals the electrode assembly with an electrolyte.

In general, lithium secondary batteries may be classified, depending on the shape of the exterior case, into can-type secondary batteries in which the electrode assembly is stored in a metal may and pouch-type secondary batteries in which the electrode assembly is stored in a pouch of an aluminum laminate sheet.

Recently, secondary batteries have been widely used in medium and large devices such as electric vehicles and energy storage systems ESSs for driving and storing energy, as well as in small devices such as portable electronic devices. A plurality of secondary batteries may be electrically connected and stored inside a module case to form a battery module. In this case, each secondary battery included in the battery module may be referred to as a battery cell. In addition, multiple battery modules may be connected to form a battery pack.

However, in the case where a battery pack includes multiple battery modules therein and where each battery module includes multiple battery cells, it may be vulnerable to a chain thermal reaction between the battery modules or between the battery cells. For example, if an event such as thermal runaway occurs inside one battery module, the thermal runaway needs to be prevented from transferring to other battery modules or other battery cells. If the propagation of thermal runaway between the battery modules or battery cells fails to be properly suppressed, an event occurring in a specific battery module or battery cell may cause a chain thermal reaction in other battery modules or other battery cells, leading to explosion or fire and worsening the same.

In particular, if an event such as thermal runaway occurs in any one battery module, gas or flame may be randomly discharged to the outside. In this case, if the discharge of gas or flame is not properly controlled, the gas or flame will be discharged to other battery modules, causing a chain thermal reaction in other battery modules. In particular, a module terminal may be provided on the front side of the battery module, and for example, a configuration, such as a module bus-bar, to be electrically connected to another battery module or battery pack may be provided thereon. Therefore, if flame is discharged toward the front of the battery module, the module terminal may be damaged in the battery pack, causing electrical short circuits. In addition, other battery modules may exist in front of a battery module, so if flame is discharged toward the front of a specific battery module, the discharged flame may head to another battery module, making it easy for fire to spread through the battery modules.

If thermal propagation between the battery modules or battery cells is not properly controlled, the voltage of the battery module or battery pack may rapidly drop. In addition, this may cause sudden interruption of devices equipped with the battery modules or battery packs, resulting in unexpected damage. For example, if the voltage suddenly drops in the battery pack while the electric vehicle is driving, it is impossible to secure enough time to move the electric vehicle to a safe location.

In addition, if fire or explosion suddenly occurs due to failure to properly control thermal propagation between the battery modules or battery cells, the users are more likely to be injured. For example, when thermal runaway occurs in an electric vehicle, if enough time fails to be secured until a full-scale fire develops, occupants may not be able to escape safely.

### DISCLOSURE

### Technical Problem

The present disclosure is designed to solve the problems of the related art, and therefore the present disclosure is directed to providing a battery module with an improved structure capable of appropriately controlling the discharge of flames and the like generated inside the battery module, and a battery pack and a vehicle including the same.

In addition, the present disclosure is also to provide a battery module or battery pack capable of suppressing the discharge of ignitable particles.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a case configured to provide a space therein and comprising a top plate; a battery cell positioned inside the case; and a flexible cover configured to cover the top plate and having a plurality of holes.

In addition, the top plate may have a plurality of venting holes.

In addition, the flexible cover may be configured to allow a venting gas to pass therethrough and capture particles when a thermal event occurs.

In addition, the case may include a side plate extending below from top plate, and the flexible cover may extend to cover the side plate.

In addition, the side plate and the flexible cover may extend along an edge of the top plate.

In addition, the battery module may further include an adhesive member configured to couple the flexible cover and the side plate.

In addition, a plurality of adhesive members may be provided, and the plurality of adhesive members may be spaced apart from each other along the edge of the top plate.

In addition, the case may include an end cover positioned below the top plate, and the flexible cover may extend to cover the side plate, and the battery module may further include a fastening member configured to couple the flexible cover to the end cover.

In another aspect of the present disclosure, there is provided a battery pack including a battery module according to the present disclosure.

In another aspect of the present disclosure, there is provided a vehicle including a battery module according to the present disclosure.

### Advantageous Effects

According to at least one of the embodiments of the present disclosure, when gas or flame occurs inside a battery module, it is possible to appropriately control the discharge of such gas or flame.

According to at least one of the embodiments of the present disclosure, electrical safety of a battery module is able to be improved.

According to at least one of the embodiments of the present disclosure, the discharge of ignitable particles is able to be suppressed.

According to at least one of the embodiments of the present disclosure, thermal propagation is able to be suppressed.

According to at least one of the embodiments of the present disclosure, it is possible to suppress the propagation of a thermal event due to flame or gas outside the battery module.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a battery module according to an embodiment of the present disclosure.
FIG. 2 is a partially exploded perspective view of the battery module in FIG. 1.
FIG. 3 is a partially exploded perspective view of the battery module in FIG. 2.
FIG. 4 is a drawing illustrating a battery pack according to an embodiment of the present disclosure.
FIG. 5 is a partially exploded perspective view of the battery pack in FIG. 4.
FIG. 6 is a partially exploded perspective view of the battery pack in FIG. 5.
FIG. 7 is a cross-sectional view illustrating the configuration taken along line B-B' in FIG. 5.
FIG. 8 is a drawing illustrating a modification of the embodiment in FIG. 7.
FIG. 9 is a drawing illustrating another modification of the embodiment in FIG. 7.
FIG. 10 is a drawing illustrating a battery module according to an embodiment of the present disclosure.
FIG. 11 is a drawing illustrating the battery module in FIG. 1 when a thermal event occurs.
FIG. 12 is a cross-sectional view illustrating the configuration taken along line A-A' in FIG. 4.
FIG. 13 is a cross-sectional view illustrating the configuration taken along line A-A' in FIG. 4 when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

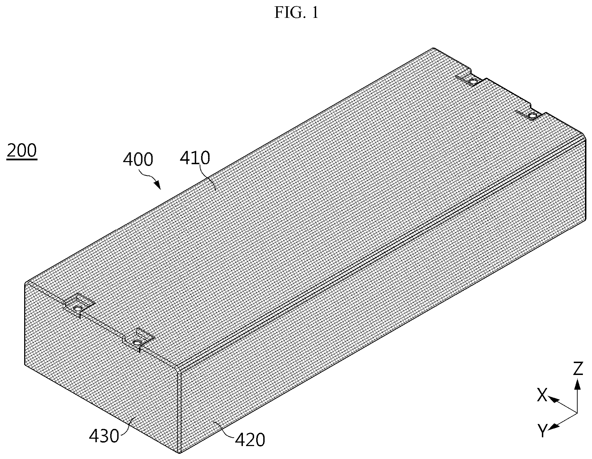

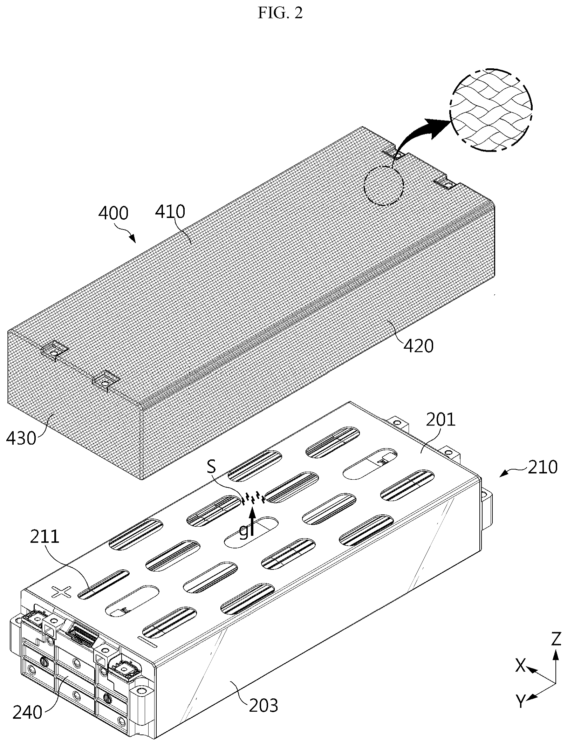

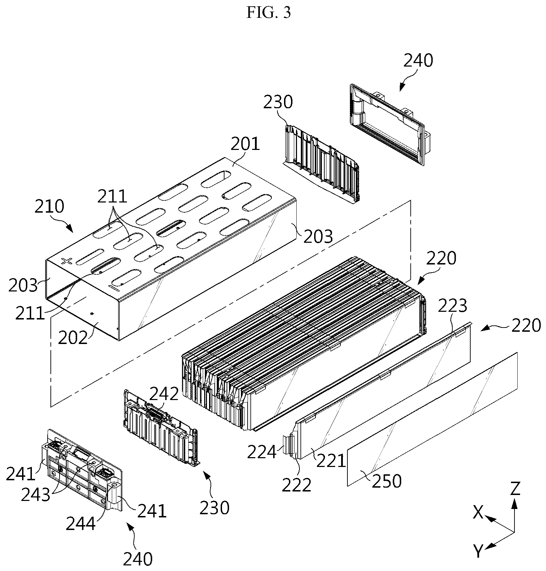

FIG. 1 is a drawing illustrating a battery module 200 according to an embodiment of the present disclosure. FIG. 2 is a partially exploded perspective view of the battery module 200 in FIG. 1. FIG. 3 is a partially exploded perspective view of the battery module 200 in FIG. 2.

Referring to FIGS. 1 to 3, the battery module 200 according to an embodiment of the present disclosure may include a case 210, a battery cell 220, and a flexible cover 400.

The case 210 may have a cuboid shape. The case 210 may also be referred to as a frame 110. The case 210 may provide a space therein. The case 210 may have a top plate 201, a bottom plate, and a pair of side plates. In addition, the case 210 may have front and rear openings.

The battery cell 220 may be positioned inside the case 210. A plurality of battery cells 220 may be provided. The multiple battery cells 220 may be stacked in the left-right direction or the Y-axis direction. In this case, the battery cell 220 may indicate a secondary battery. The battery cell 220 may include a storage portion 221 having an electrode assembly, a first sealing portion 222 protruding from the front and rear sides of the storage portion 221, and a second sealing portion 223 protruding from the upper side of the storage portion 221. In addition, the battery cell 220 may include electrode leads 224 protruding from the front and rear sides of the first sealing portion 222, respectively. In particular, the battery cell 220 may be a pouch-type secondary battery. However, the battery cell 220 is not limited to the pouch type, and may have various shapes such as a cylindrical shape or a cuboid shape. Each battery cell 220 may extend in the front-back direction or the X-axis direction. The electrode leads 224 may protrude toward the front and rear of each battery cell 220.

The flexible cover 400 may cover the case 210. The flexible cover 400 may cover the top plate 201. In addition, the flexible cover 400 may have a plurality of holes. The flexible cover 400 may include a fire-resistant material. In addition, the flexible cover 400 may include a heat-resistant material. For example, the flexible cover 400 may include at least one material among silica, glass, mica, and ceramic.

In addition, the flexible cover 400 may be a thin cloth or fabric. The flexible cover 400 may have a porous structure. Alternatively, the flexible cover 400 may have a mesh structure. Alternatively, the flexible cover 400 may have a plurality of holes. The flexible cover 400 may allow gas such as a venting gas g to pass therethrough. On the other hand, the flexible cover 400 may not allow ignitable particles S such as sparks to pass therethrough.

According to this configuration of the present disclosure, the thermal safety of the battery module 200 may be improved. When a thermal event occurs in the battery cell 220, the venting gas g and ignition particles S may be released. The flexible cover 400 may discharge the venting gas g to the outside of the battery module 200 and capture particles such as ignitable particles S, sparks, dust, or internal components of the battery cell, thereby blocking the propagation of the thermal event.

In addition, according to this configuration of the present disclosure, even if the battery module 200 is exposed to the venting gas g, flames, or ignitable particles S generated outside, the propagation of a thermal event may be blocked.

Referring to FIGS. 1 to 3, the top plate 201 of the battery module 200 according to an embodiment of the present disclosure may be have a venting hole 211. A plurality of venting holes 211 may be provided. The venting hole 211 may connect the inside and the outside of the case 210. In addition, the plurality of venting holes 211 may face the flexible cover 400.

According to this configuration of the present disclosure, the thermal safety of the battery module 200 may be improved. When a thermal event occurs in the battery cell 220, the venting gas g and the ignitable particles S may be discharged to the outside of the case 210 through the venting hole 211. In addition, the flexible cover 400 may capture the ignitable particles S such as sparks and discharge the venting gas g.

Referring to FIGS. 1 to 3, the side plate 203 of the battery module 200 according to an embodiment of the present disclosure may extend in the downward direction of the top plate 201 or in the -Z-axis direction. A pair of side plates 203 may be provided.

In addition, the flexible cover 400 may extend to cover the side plates 203.

According to this configuration of the present disclosure, the thermal safety of the battery module 200 may be improved. The flexible cover 400 may more reliably block ignitable particles S from being discharged to the outside of the battery module 200 by covering the top plate 201 and the side plates 203 of the case 210.

Referring to FIGS. 1 to 3, the side plates 203 and the flexible cover 400 of the battery module 200 according to an embodiment of the present disclosure may extend along one edge of the top plate 201. Alternatively, the side plates 203 and the flexible cover 400 may extend along the perimeter of the top plate 201. Alternatively, the side plate 203 and the flexible cover 400 may extend in the left-right direction or the Y-axis direction.

According to this configuration of the present disclosure, the thermal safety of the battery module 200 may be improved. The flexible cover 400 may more reliably block ignitable particles S from being discharged to the outside of the battery module 200 by extending along the top plate 201 or the side plates 203.

Referring to FIGS. 1 to 3, the battery module according to an embodiment of the present disclosure may include a pad 250, a bus-bar frame assembly 230, and an end cover 240.

The pads 250 may be disposed between the plurality of battery cells 220. The pads 250 may be disposed between at least some battery cells 220 and/or on the outer side of the stack. For example, the pads 250 may be configured to be disposed between every four battery cells 220 stacked in the left-right direction.

The pad 250 may include an elastic material so as to absorb swelling of the battery cell 220. For example, the pad 250 may be made of a foam material such as polyurethane. Alternatively, the pad 250 may include a material capable of blocking heat or flame. For example, the pad 250 may include an insulating or fireproof material such as silicon or mica.

The bus-bar frame assembly 230 may be provided at the front and rear of the plurality of battery cells 220, respectively. The bus-bar frame assembly 230 may be electrically connected to the electrode leads 224 of the plurality of battery cells 220.

A pair of end covers 240 may be respectively coupled to the front and rear of the case 210. The pair of end covers 240 may cover the front and rear surfaces of the case 210. The end cover 240 may have a rectangular shape.

In addition, the flexible cover 400 may include a top part 410, a side part 420, and an end part 430. The top part 410 may cover the top plate 201. The side part 420 may extend downward from the top part 410. A pair of side parts 420 may be provided. The pair of side parts 420 may cover the pair of side plates 203. The end part 430 may extend downward from the top part 410. A pair of end parts 430 may be provided. The pair of end parts 430 may cover the pair of end covers. The end part 430 and the side part 420 may be connected to each other.

The flexible cover 400 may have a larger size than the case 210. Therefore, when a thermal event occurs, the flexible cover 400 may be flexible. The flexible cover 400 may flutter or expand by the venting gas g.

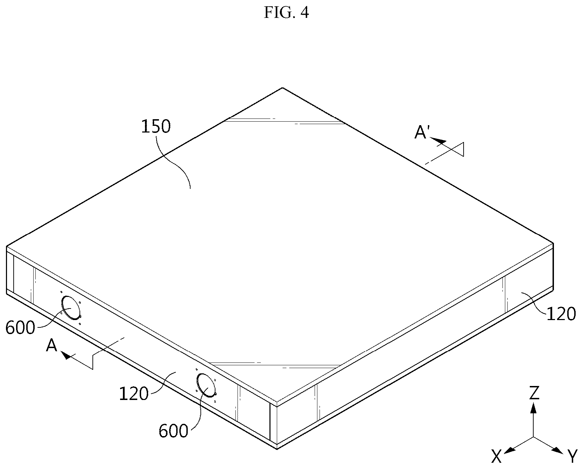

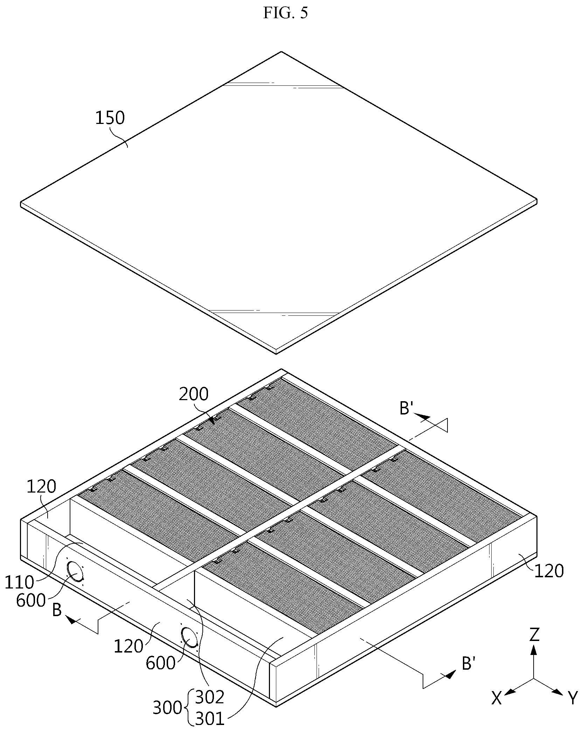

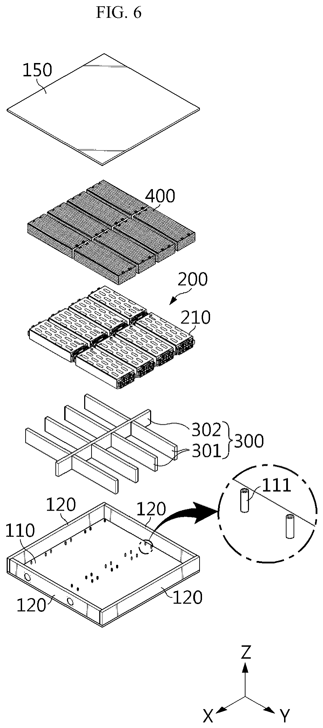

FIG. 4 is a drawing illustrating a battery pack according to an embodiment of the present disclosure. FIG. 5 is a partially exploded perspective view of the battery pack in FIG. 4. FIG. 6 is a partially exploded perspective view of the battery pack in FIG. 5.

Referring to FIGS. 4 to 6, a battery pack according to an embodiment of the present disclosure may include a base plate 110, a side wall 120, a pack cover 150, a partition wall 300, and a venting device 600.

A pack case 100 may include a base plate 110, a side wall 120, and a pack cover 150.

The base plate 110 may have a rectangular shape. The base plate 110 may have a flat shape. The base plate 110 may form the exterior of the battery pack. The base plate 110 may provide an inner space of the battery pack.

A plurality of battery modules 200 may be provided. The battery modules 200 may be installed, fastened, coupled, fixed, or attached to the upper surface of the base plate 110. In addition, the battery modules 200 may be installed, fastened, coupled, fixed, or attached to a mount 111 provided on the upper surface of the base plate 110.

The side wall 120 may be installed, fastened, coupled, fixed, or attached to the upper surface of the base plate 110. The side wall 120 may be configured as four pieces. The side walls 120 may be disposed along the perimeter of the base plate 110. The side walls 120 may form the exterior of the battery pack. The side walls 120 may provide an inner space. The battery module 200 may be surrounded by the side walls 120.

The pack cover 150 may be configured as a rectangular plate. The pack cover 150 may have a flat plate shape. The pack cover 150 may form the exterior of the battery pack. The pack cover 150 may cover the inner space of the battery pack. The pack cover 150 may be installed, fastened, coupled, fixed, or attached to the side walls 120. In addition, the pack cover 150 may be installed, fastened, coupled, fixed, or attached to the partition wall 300. In addition, the pack cover 150 may cover the top of the battery module 200.

The partition wall 300 may include a first partition wall 301 and a second partition wall 302. A plurality of partition walls 300 may be provided. The partition walls 300 may be installed, fastened, fixed, coupled, or attached to the upper surface of the base plate 110. The partition walls 300 may partition the inner space of the battery pack. The respective battery modules 200 may be positioned in respective spaces partitioned by the partition walls 300. In addition, the partition walls 300 may face at least one side of the battery module 200.

The venting device 600 may be installed on the side wall 120. For example, the venting device 600 may be installed on the front side wall 120. For example, the venting device 600 may be a gas valve. The venting device 600 may be opened when the pressure increases inside the pack case 100, thereby discharging gas. In addition, the venting device 600 may block external air from flowing into the pack case 100. A plurality of venting device s600 may be provided.

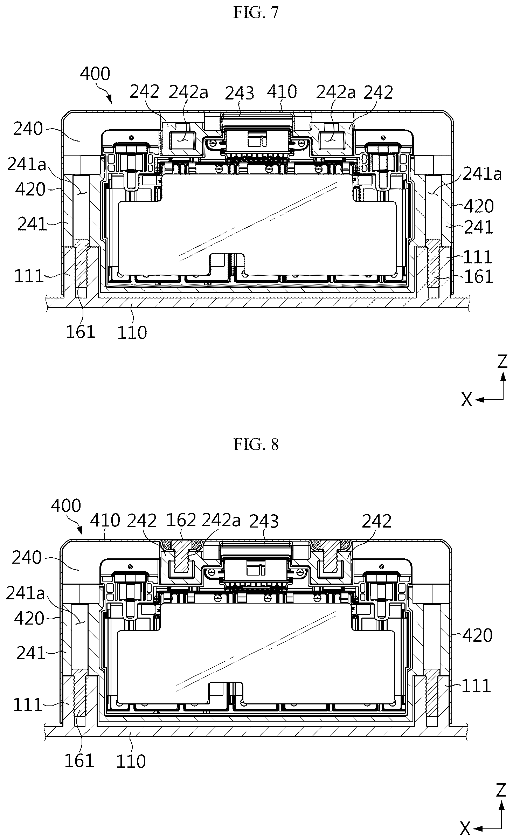

FIG. 7 is a cross-sectional view illustrating the configuration taken along line B-B' in FIG. 5. Referring to FIGS. 3 and 7, the battery module 200 according to an embodiment of the present disclosure may be installed on a mount 111. The end cover may have a first coupling portion 241. A pair of first coupling portions 241 may be provided. The first coupling portion 241 may include a first installation hole 241a. A first fastening member 161 may be fastened to the mount 111 through the first installation hole 241a.

In addition, the flexible cover 400 may cover the entirety of the case 210. In this case, the flexible cover 400 and the case 210 may not be fixed, fastened, or bonded.

According to this configuration of the present disclosure, the flexible cover 400 and the case 210 may be in contact while being separated from each other. Therefore, when a thermal event occurs, the flexible cover 400 may inflate flow in response to the pressure of the venting gas g.

FIG. 8 is a drawing illustrating a modification of the embodiment in FIG. 7. Referring to FIGS. 3 and 8, a battery module 200 according to an embodiment of the present disclosure may include a second fastening member 162 that couples the flexible cover 400 to the end cover. The end cover may include a control terminal 243 on top. In addition, it may include a pair of second coupling portions 242. The control terminal 243 may be positioned between the pair of second coupling portions 242. The second coupling portions 242 may each have a second installation hole 242a. The second fastening member 162 may install, fasten, couple, or fix the flexible cover 400 to the second installation hole 242a. The second fastening member 162 may pass through the flexible cover 400.

According to this configuration of the present disclosure, the second fastening member 162 may fix the flexible cover 400 while allowing the flexible cover 400 to be flexible. As a result, the flexible cover 400 may stably capture ignitable particles S and discharge venting gas g.

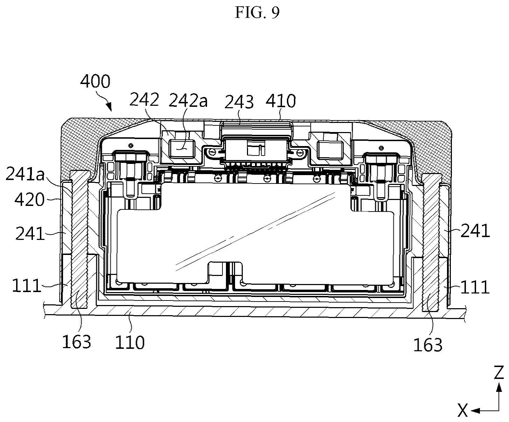

FIG. 9 is a drawing illustrating another modification of the embodiment in FIG. 7. Referring to FIGS. 3 and 9, a battery module 200 according to an embodiment of the present disclosure may include a third fastening member 163 that couples the flexible cover 400 to the end cover. The third fastening member 163 may install, fasten, couple, or fix the flexible cover 400 to the first installation hole 241a. The third fastening member 163 may pass through the flexible cover 400. In addition, the third fastening member 163 may be fastened to the mount 111 by passing through the first installation hole 241a.

According to this configuration of the present disclosure, the third fastening member 163 may fix the flexible cover 400 while allowing the flexible cover 400 to be flexible. As a result, the flexible cover 400 may stably capture ignitable particles S and discharge venting gas g.

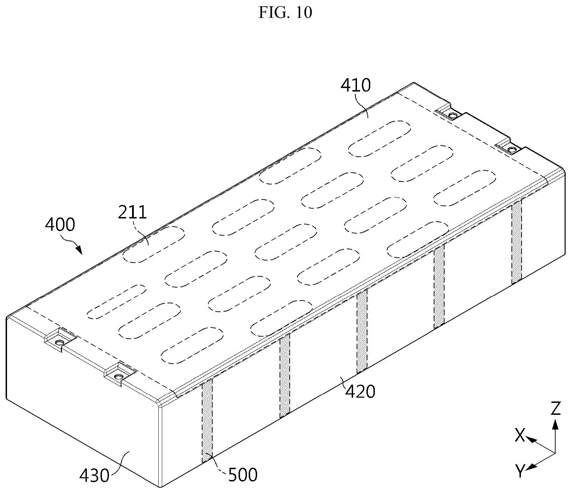

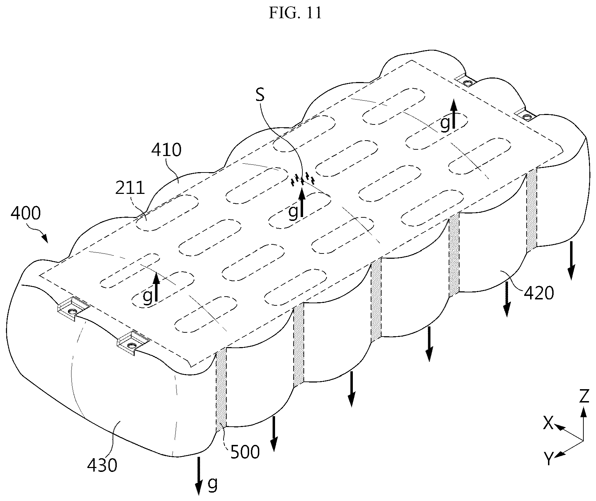

FIG. 10 is a drawing illustrating a battery module 200 according to an embodiment of the present disclosure. FIG. 11 is a drawing illustrating the battery module 200 in FIG. 1 when a thermal event occurs.

Referring to FIGS. 10 and 11, the battery module 200 according to an embodiment of the present disclosure may further include an adhesive member 500 that couples, fixes, or bonds the flexible cover 400 and the side plate 203. The adhesive member 500 may extend in the up-down direction or the Z-axis direction.

According to this configuration of the present disclosure, the adhesive member 500 may fix the flexible cover 400 while allow the flexible cover 400 to be flexible. The top part 410 where the adhesive member 500 is not disposed may be flexible. As a result, the flexible cover 400 may stably capture ignitable particles S and discharge venting gas g.

Referring to FIG. 10 and FIG. 11, a plurality of adhesive members 500 may be provided in the battery module 200 according to an embodiment of the present disclosure. The plurality of adhesive members 500 may be disposed or spaced apart from each other along one edge of the top plate 201. In addition, the plurality of adhesive members 500 may be disposed or spaced apart from each other in the left-right direction or the Y-axis direction.

According to this configuration of the present disclosure, the adhesive member 500 may fix the flexible cover 400 while allow the flexible cover 400 to be flexible. The side part 420 may have a larger size than the side plate 203. As a result, when a thermal event occurs, the side part 420 may form a discharge port between the adjacent adhesive members 500 to discharge the venting gas g.

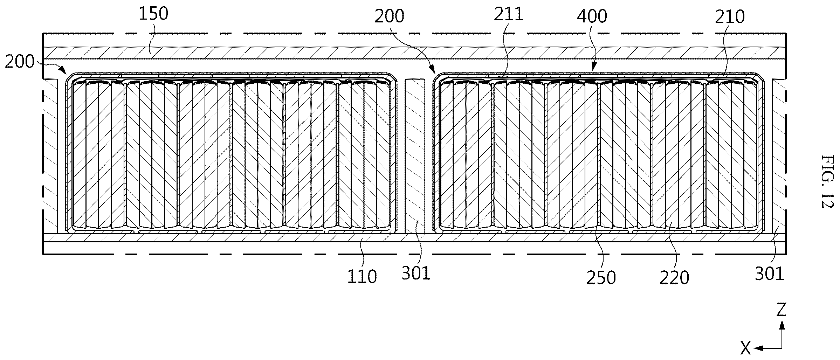

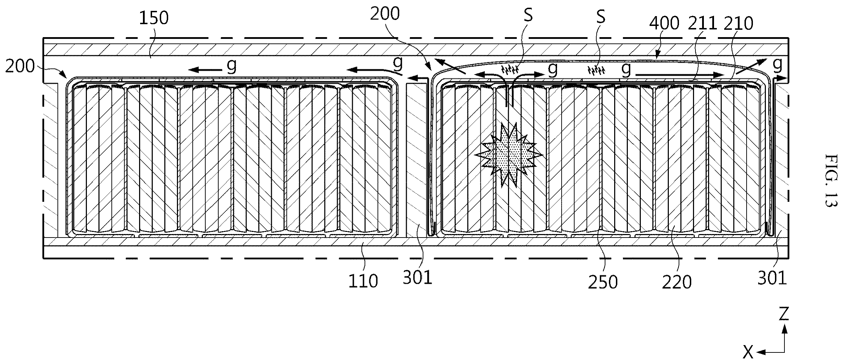

FIG. 12 is a cross-sectional view illustrating the configuration taken along line A-A' in FIG. 4. FIG. 13 is a cross-sectional view illustrating the configuration taken along line A-A' in FIG. 4 when a thermal event occurs.

Referring to FIGS. 12 and 13, a battery pack according to an embodiment of the present disclosure may include a plurality of battery modules 200a and 200b. When a thermal event occurs in the battery module 200a, the flexible cover 400 may expand or inflate, thereby discharging the venting gas g. In this case, the flexible cover 400 may capture ignitable particles S. Therefore, the ignitable particles S may remain inside the battery module 200a. The venting gas g may pass through the flexible cover 400. In addition, the venting gas g may move downward or in the -Z-axis direction and may be discharged between the side part 420 and the side plate 203.

The battery module 200b adjacent to the battery module 200a where the thermal event occurred may not be exposed to the ignitable particles S or flame. In addition, the flexible cover 400 of the battery module 200b may block the propagation of the thermal event due to the venting gas g. The venting gas g may be discharged to the outside of the battery pack through the venting device 600.

The battery pack according to the present disclosure may include one or more battery modules according to the present disclosure described above. In addition, the battery pack according to the present disclosure may further include, in addition to the battery module, various components known at the time of filing the present disclosure, such as a BMS, a bus-bar, a relay, a current sensor, and the like.

Meanwhile, components such as a BMS, a bus-bar, a relay, a current sensor, and the like may be included as components of the battery module according to the present disclosure. In this case, the components such as a BMS, a bus-bar, a relay, a current sensor, and the like may be provided inside the pack case 100. In this case, the battery module may be referred to as a battery pack, and the pack case 100 may be referred to as a pack housing 100. Moreover, in this case, the battery module according to the present disclosure may be configured as a cell-to-pack-type battery pack in which the battery cell 220 is directly mounted in the pack housing 100.

The battery module according to the present disclosure may be applied to a vehicle such as an electric vehicle or a hybrid vehicle. That is, the vehicle according to the present disclosure may include a battery module according to the present disclosure or a battery pack according to the present disclosure. In addition, the vehicle according to the present disclosure may further include various other components included in the vehicle, in addition to the battery module or battery pack. For example, the vehicle according to the present disclosure may further include a car body, a motor, a control device such as an ECU (electronic control unit), and the like, in addition to the battery module according to the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a case configured to provide a space therein and comprising a top plate;
a battery cell positioned inside the case; and
a flexible cover configured to cover the top plate and having a plurality of holes.

2. The battery module according to claim 1,
wherein the top plate has a plurality of venting holes.

3. The battery module according to claim 1,
wherein the flexible cover is configured to allow a venting gas to pass therethrough and capture particles when a thermal event occurs.

4. The battery module according to claim 1,
wherein the case comprises a side plate extending below from top plate, and
wherein the flexible cover extends to cover the side plate.

5. The battery module according to claim 4,
wherein the side plate and the flexible cover extend along an edge of the top plate.

6. The battery module according to claim 4,
further comprising an adhesive member configured to couple the flexible cover and the side plate.

7. The battery module according to claim 6,
wherein a plurality of adhesive members are provided, and
wherein the plurality of adhesive members are spaced apart from each other along the edge of the top plate.

8. The battery module according to claim 1,
wherein the case comprises an end cover positioned below the top plate,
wherein the flexible cover extends to cover the side plate, and
wherein the battery module further comprises a fastening member configured to couple the flexible cover to the end cover.

9. A battery pack comprising a battery module of any one of claims 1 to 8.

10. A vehicle comprising a battery module of any one of claims 1 to 8.
